# EUROPEAN PATENT APPLICATION

(11) **EP 4 764 917 A1**
(43) Date of publication of application: **24.06.2026**
(21) Application number: 24465609.6
(22) Date of filing: 20.12.2024
(51) Int. Cl.: G06F 21/55, G06F 21/60, G06F 21/86, G06F 21/87, H04L 9/40, H04L 9/08

(54) **CRYPTOGRAPHIC APPARATUS ADMINISTRATED REMOTELY FROM A HIGH-SECURITY TRUST CENTER**

(71) Applicant: Siemens Aktiengesellschaft, 80333 München (DE)
(72) Inventor: The designation of the inventor has not yet been filed
(74) Representative: Siemens Patent Attorneys

(57) **Abstract**

Cryptographic apparatus (41) administrated remotely from a high-security trust center (30) comprising,
- a service interface (43) configured to receive a request for processing a data object, and to output in return at least a resulting data object,
- a processing module (45) comprising an access-controlled storage element (47) storing at least one cryptographic key and a cryptographic processing element (46) configured for processing the data object using the at least one cryptographic key, and
- an administration interface (44) configured to establish a mutually authenticated communication connection (49) with the high-security trust center (30) for administrating the processing module (45) by the high-security trust center (30).

## Description

### Field of the Invention

The present disclosure relates to a cryptographic apparatus and a computer-implemented method for providing digitally resulting data objects by the cryptographic apparatus which is securely administrated remotely from a high-security trust center.

### Background

Digital Public-Key Certificates are generated by trusted Certification Authorities, CA. The certificate authority issues, renews, manages and revokes digital certificates. The CA signs certificates with the certificate authority's private key and is the trust anchor for the issued certificates. The certificate authority's private key is normally stored in a Hardware Security Module.

CA implementations are available as software product loadable into a computer, in the cloud, or as an appliance. The security level of a Private Key Infrastructure, PKI, solution depends strongly not only on the quality of the implementation of the certificate authority, but also on the way it is operated and administrated.

PKI solutions with only low security requirements may be operated nearly any-where by anyone, e.g., in a public cloud, on an employee's PC / laptop, on a server in a non-monitored server room.

In contrast, high-security PKI solutions require product-grade and hardened implementation, e.g., with a Hardware Security Module to store private keys, a well-protected operation environment, e.g., a data center, experienced and well-trained operations team performing defined operational and administrative measures and procedures like a four-eyes-principle, regular audit, backups, and furthermore. A facility providing all above features is called a high-security trust center throughout this document.

Commonly, high-security PKI solutions can only be operated at dedicated locations providing this well-protected operation environment. Entities that want to get a certificate from such a high-security PKI solution need to connect via a communication connection to the location where the CA is operated to send the data which shall be included in an authentic way, and to get back the certificate.

The CA has to be informed about the desired content of the certificate which shall be included in the certificate besides the public key of the key pair. In case a key pair is generated at the CA, the private key has to be transported to the entity using a secure (confidential) method.

Basically, the same is true for digitally signing an entity's data, like firmware packages or individual device configurations, by a high-security signature service or a decrypting an entity's data by a high-security decryption service.

When the communication connection is not available, an entity cannot request and obtain a certificate, signature, or decrypted data from the high-security PKI, signature service, or decryption service respectively. This is especially a problem for sites like factories without a permanent wide-area network connectivity which manufacture devices that shall get a public-key certificate or a digital signature from a high-security PKI or signature service.

For PKI use cases, a local CA can be operated as emergency CA directly at the factory site. This causes high administration effort for CA maintenance, operational procedures, staff training, etc. at the local site. Nevertheless, this cannot achieve the same high security level as is provided by a trust center. Another possibility would be to postpone the issuance of the certificate. This has the disadvantage that usual processes need to be suspended, and additional effort is required to request and implement the certificate for the entity at a later point in time. Further the certificate assignment is delayed.

Therefore, it is the object of the present application to ensure the issuance of certificates, signatures or decryption services with high-security requirements at arbitrary sites located remotely from a high-security trust center, operating without continuously available communication to the trust center.

### Brief Summary of the Invention

This object is solved by the features of the independent claims. The dependent claims contain further developments of the invention.

A first aspect concerns a cryptographic apparatus administrated remotely from a high-security trust center comprising,
a service interface configured to receive a request for processing a data object, and to output in return at least a resulting data object,
a processing module comprising an access-controlled storage element storing at least one cryptographic key and a cryptographic processing element configured for processing the data object using the at least one cryptographic key, and
an administration interface configured to establish a mutual authenticated communication connection with the high-security trust center for administrating the processing module by the high-security trust center.

The administration interface of the cryptographic apparatus enables administrating the processing module complying with high-security features of the high-security trust center. Thus, administrational measures ensuring the high-security standard of the trust center are applied also to the cryptographic apparatus even when administrated remotely from the trust center. The cryptographic apparatus provides the required processing function and can be operated at any location, e.g., at factories located anywhere remote from the high-security trust center.

A second aspect concerns a computer-implemented method for providing digitally a resulting data object by the cryptographic apparatus operated remotely from a high-security trust center.

This solution allows to operate a CA or signing or decryption solution in a highly secure way even at a site that does not have the high-security environment and trained staff of a data center. Only limited online communication connection (at certain times) to the data center is required for maintenance and other forms of administration, but no wide-area network connection when certificates or signatures or decrypted data objects are requested.

### Description of Embodiments

In a further embodiment the cryptographic apparatus comprises a tamper-resistant and tamper-evident housing and/or at least one sensor outputting a breach signal to an alarming element when a breach of the tamper-resistant and tamper-evident housing is detected by the sensor.

The tamper-resistant and tamper-evident housing impedes intrusion into the cryptographic apparatus and especially manipulating the processing module. If an intrusion could not be prevented, the alarming element is informed. Thus, measures can be activated to hinder the intruder to use or manipulate the cryptographic apparatus.

In a further embodiment an access key for accessing the access-controlled storage element is deleted when a breach of the tamper-resistant and tamper-evident housing is detected by the sensor.

This impedes the cryptographic apparatus to issue any further signatures or decryptions and thus prevents any misuse of the cryptographic apparatus.

In a further embodiment the access key is stored in a non-persistent memory of the cryptographic apparatus such that the access key is lost automatically when the cryptographic processing element loses its energy supply.

Thus, the access key is no longer accessible when the cryptographic apparatus was shut down or without electrical power, even if it is re-started afterwards. This provides an easy and effective way to hamper misuse of the cryptographic apparatus when stolen.

In a further embodiment the access-controlled storage element is implemented at a remote secured location and the cryptographic key is used via a secure communication connection while being held in the access-controlled storage element.

This reduces the security precautions that have to be implemented locally at the cryptographic apparatus and thus the costs of operating and administrating the cryptographic apparatus. Additionally, available access-controlled storage elements can be reused providing flexible architectures of the cryptographic apparatus.

In a further embodiment the administration interface is configured to grant access only to an administrational unit or personnel and complying to access rules of the high-security trust center operating the processing module.

Thus, the administration interface is access-controlled and enables similar administration, maintenance, updating and furthermore as applied in the trust center.

In a further embodiment the processing module (45) is configured to operate as a signature server for signing data objects or as a decryption server for decrypting data objects.

In a further embodiment the processing module is configured to operate as a certificate authority for issuing digital certificates.

Thus, the cryptographic apparatus operates a local CA in a secure box.

In a further embodiment the processing module comprises a database for storing information about each digital certificate which was issued by the processing module.

This enables the cryptographic apparatus to manage the issued certificate as commonly done by a CA operated inside a trust center, i.e., to renew, manage and revoke digital certificates.

In a further embodiment a registration authority is connected via the service interface to provide additional information depending on a requested certificate.

Thus, the cryptographic apparatus can be operated in an extended PKI infrastructure comprising the registration authority.

In a further embodiment the cryptographic apparatus comprises a monitoring interface configured to transfer monitoring data and/or backup data to a server.

In a further embodiment the cryptographic apparatus comprises the monitoring interface is configured as a unidirectional interface transferring data only from the certificate database to a local backup server.

This facilitates drawing backups of the certificate database in short time intervals intermediate to backups of the certificate database initiated and transferred via the administration interface.

In a preferred embodiment the cryptographic apparatus performs a restart in predefined time intervals.

This prevents misuse when the cryptographic apparatus is stolen or under control of an unintended third party.

In a preferred embodiment at least parts of the cryptographic apparatus is sealed by a resin or similar material filled into its housing.

This complicates mechanical intrusion and unintended manipulation of the cryptographic apparatus.

### Brief description of the drawings

The invention will be explained in more detail by reference to accompanying figures. Similar objects will be marked by the same reference signs.
- Figure 1: schematically illustrates signing environment a high-security certificate authority operated inside a trust center according to the state of the art.
- Figure 2: schematically illustrates an embodiment of an inventive cryptographic apparatus operated in a not highly secure location.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements, as long as this is done in a sufficiently secure way. A connection or a coupling of elements or components or nodes can for example be implemented by a wire-based, a wireless connection and/or a combination of a wire-based and a wireless connection.

Functional units can be implemented by dedicated hardware, e.g., processor, by firmware or by software, and/or by a combination of dedicated hardware and firmware and software. It is further noted that each functional unit described for an apparatus can perform a functional step of the related method and vice versa.

### Background

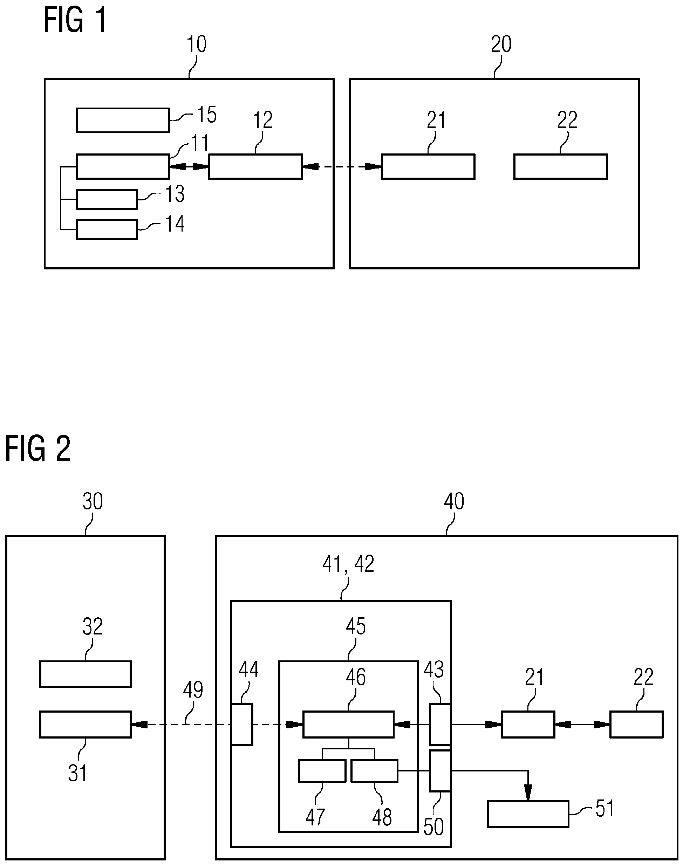

Fig. 1 shows an PKI according to the state of art with a high-security certificate authority 11 issuing digital certificates requested from an entity 22. The high-security certificate authority 11 is located at a separate, high-secure location called trust center 10. The high-security certificate authority 11 is connected to a secure element 13 holding private keys, and a database 14 storing issued digital certificates. Often, a root certificate authority 15 is located in the trust center 10 providing a trust anchor for the certificates. The certificate authority may be connected to a registration authority and/or gateway 12, which is responsible for checking authorization of requests for digital certificates based on authenticating an entity 22 making the request.

The high-security certificate authority 11 provides for instance manufacturer device certificates for products or devices, operational certificates used for products and solutions, certificates for TLS servers in the Internet and intranet, signature certificates for signers of the product PKI digital signature service, or infrastructure certificates for servers and clients supporting the product PKI services.

The entity 22 requesting the certificate is located at a local site 20, e.g., at a factory, which is physically separated and remote from the trust center 10. Optionally, a local registration authority 21 is located on the local site 20 to check the authenticity and authorization of the requester and the data which shall be included in the requested digital certificate. Entity 22 that requests a certificate from the high-security certificate authority 11 needs to connect to the location of the trust center where the CA is operated. The entity 22 sends data which shall be included in the requested certificate in an authentic way to the CA 11 and receives in response the certificate. These data and certificates are transferred by a communication connection established between the entity 22 and the CA 11.

The highly secure entity 11 can also be configured as a signature server providing digital signatures and/or as a decryption service.

If the communication connection is interrupted and no longer available, entity 22 cannot get a certificate or signature or decryption from the high-security PKI or signature service. This is a problem for sites like factories without permanent wide-area network connection that manufacture devices that shall get a public-key certificate or a digital signature or decrypted data from the high-security service.

### Description of Examples

Fig. 2 depicts an embodiment of a cryptographic apparatus 41 which provides a signing or decryption service, or issues certificates as provided by a high-security trust center 30 but located on a not highly secure site 40, e.g., in a factory, remotely of a high-security trust center.

The cryptographic apparatus 41, synonymously called secure box, is set up and configured at the trust center 30, and then physically moved to the location where it shall be operated. The cryptographic apparatus 41 is operated in a secure, well-protected housing 42 at the local site 40 where the certificates or signatures or decryptions are required, but remotely administered and maintained from the highly secure trust center 30 via a well-protected communication channel only available via a dedicated interface 44.

The cryptographic apparatus 41 comprises a service interface 43 configured to receive a request for signing or decrypting a data object, i.e., a certificate or any other data, and to transmit in return at least the requested resulting data object to the requesting entity 22, e.g., a device. In case of requesting a certificate, the service interface can be accessed by an authorized local registration authority 21 and/or signature client. The local registration authority 21 and/or signature client pre-processes a certificate request message or other data to be signed received from the entity 22. In an embodiment, the service interface is configured to connect the requesting entity 22 directly. Access to the service interface 43 must be restricted to authorized clients in the same way as if it was a remote interface at a central location.

The cryptographic apparatus 41 comprises a processing module 45 containing an access-controlled storage element 47 holding at least one cryptographic key and a cryptographic processing element 46 configured for signing or decrypting a data object using the at least one cryptographic key. The processing module 45 is configured as a certificate authority for issuing digital certificates or as a signature or decryption server.

In case the cryptographic apparatus 41 is operating as a certificate authority the processing module 45 may contain a certificate database 48 storing an identifier of the issued certificates or copy of the issued certificates.

The cryptographic apparatus 41 comprises an administration interface 44 which is configured to provide a mutually authenticated communication connection 49 with the high-security trust center 30 for administrating the processing module 45 by the high-security trust center 30. Preferably, the communication connection 49 directly connects the cryptographic apparatus 41 with the trust center 30. The trust center 30 is a highly secure service location may comprise a root certification authority as trust anchor for the certificate of the cryptographic apparatus 41.

The administration interface 44 allows the professional operations team of the high-security trust center 30 via a control unit 31 to connect to the cryptographic apparatus 41 during times when an online connection is available. So, this administration team, also called personnel, can perform maintenance tasks, e.g. update software/firmware of the cryptographic apparatus 41, install a new CA or a new cryptographic key, make backups, and furthermore. An operator of the cryptographic apparatus 41 on the local site 40 cannot and must not do any maintenance tasks and does not have access to such functions.

The administration interface 44 is configured to grant access only to an administrational unit or personnel complying to access rules of the high-security trust center 30. The high-security trust center 30 may not only control the cryptographic apparatus 41 at the local site 40 but also operate certificate authorities and/or signing or decryption servers at the trust center 30 itself. The administration interface 44 is configured to grant access only to registered personnel located in the high-security trust center 30.

The access-controlled storage element 47, e.g., a hardware security module, holds the cryptographic key of the CA and/or signature key or decryption key of the signature server or decryption server, respectively. The cryptographic key, the signature key and the decryption key are usually the private key of the CA, signature server and decryption server, respectively. An access key required to read the content of the access-controlled storage element 47 is stored in a non-persistent memory of the cryptographic apparatus 41. Access to the access-controlled storage element 47 via the access key is required for accessing the cryptographic key and signing the certificates or other data or decrypting data with this cryptographic key.

The access-controlled storage element 47 is preferably implemented in the cryptographic apparatus 41 at the local site 40. In an embodiment the access-controlled storage element 47 is implemented remotely from the local site 40. In this case, the cryptographic key is used by the processing module 46 in the cryptographic apparatus 41 via a secure communication connection while being held in the access-controlled storage element 47.

The cryptographic apparatus 41 may comprise a backup interface 50 configured to transfer monitoring data and/or backup data to a monitoring server 51. The backup interface 50 is uses for transferring automatically a backup of the certificate database 38 and/or logfiles, audit data, and similar data to the monitoring server 51 located at an external location, e.g., a network share at the local site 40. In an embodiment the backup interface 50 is configured as a unidirectional interface when backup data, i.e., a copy of the data stored in the certificate database is transferred from the certificate database 48 to the monitoring server 51.

The cryptographic apparatus 41 is protected against unauthorized access. When it is opened or tampered with, this must be detected by suitable sensors and the access key for accessing the access-controlled storage element is automatically deleted, making the cryptographic apparatus useless. In an embodiment, at least parts of the cryptographic apparatus 41 or the cryptographic apparatus 41 as a whole is sealed by a resin filled or similar material into the housing 42.

The cryptographic apparatus 41 comprises a tamper-resistant and tamper-evident housing 42 and at least one sensor outputting a breach signal to an alarming element when a breach of the tamper-resistant and tamper-evident housing 42 is detected by the sensor. The alarming element is not explicitly depicted in Fig. 2. The alarming element can be implemented at the cryptographic apparatus 41 or in a monitoring center or at the trust center 30. The access key for accessing the access-controlled storage element 47 is deleted when a breach of the tamper-resistant and tamper-evident housing 42 is detected by the sensor.

As a further security measure, the cryptographic apparatus can be requested to perform a restart in predefined time intervals. The restart is preferably requested via the administration interface after power loss or in regular time intervals to prevent misuse, e.g., when the cryptographic apparatus 41 is stolen. As the access key is stored in a non-persistent memory of the cryptographic apparatus 41, the access key must be reloaded via the trust center 30 after each restart, limiting a misuse of the cryptographic apparatus 41 to the predefined time interval between two consecutive restarts.

This solution allows to operate a PKI or signing or decryption solution in a highly secure way even at a site that does not have the high-security environment and trained staff of a trust center. Only limited online connection, e.g., at certain times, to the data center is required for maintenance, but no wide-area network connection when certificates or signatures or decryption are requested.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

The described approach allows to operate a high-secure PKI solution, i.e., a CA or signature or decryption server, at a local site while still having it administered and maintained remotely by trained staff in the trust center. It is not necessary to train local staff regarding PKI operation. PKI operation can be much better controlled even if the connection between trust center and local site is only available sporadically.

Storing certificate signing request messages temporarily during connection outages for later certificate issuing becomes obsolete. Instead, all certificates can be issued locally immediately when required, even without online connection to the trust center. Manufactured devices can get their certificates immediately, and it is not necessary to handle them later again for a second time. This avoids much procedural and technical overhead and extra failure potential. The same holds when locally producing other data signatures.

Locally decrypting data where the data is actually needed has its specific security advantages over using a remote decryption service where thereafter the decrypted data needs to be transferred back to the entity requesting it.

## Claims

1. Cryptographic apparatus operated remotely from a high-security trust center (30) comprising,
- a service interface (43) configured to receive a request for processing a data object, and to output in return at least a resulting data object,
- a processing module (45) comprising an access-controlled storage element (47) storing at least one cryptographic key and a cryptographic processing element (46) configured for processing the data object using the at least one cryptographic key, and
- an administration interface (44) configured to establish a mutually authenticated communication connection (49) with the high-security trust center (30) for administrating the processing module (45) by the high-security trust center (30).

2. Cryptographic apparatus according to claim 1, comprising a tamper-resistant and/or tamper-evident housing (42) and/or at least one sensor outputting a breach signal to an alarming element when a breach of the tamper-resistant and tamper-evident housing (42) is detected by the sensor.

3. Cryptographic apparatus according to any of the preceding claims, wherein an access key for accessing the access-controlled storage element (47) is deleted when a breach of the housing (42) is detected.

4. Cryptographic apparatus according to claim 3, wherein the access key for accessing the access-controlled storage element (47) is stored in a non-persistent memory of the cryptographic apparatus (41).

5. Cryptographic apparatus according to any of the preceding claims, wherein the access-controlled storage element (47) is implemented at a remote secured location and the cryptographic key is used by cryptographic processing element (46) via a secure communication connection with the access-controlled storage element (47).

6. Cryptographic apparatus according to any of the preceding claims, wherein the administration interface (44) is configured to grant access only to an administrational unit or personnel complying to access rules of the high-security trust center (30) administrating the processing module (45).

7. Cryptographic apparatus according to claim 6, wherein the administration interface (44) is configured to grant access only to registered personnel located in the high-security trust center (30).

8. Cryptographic apparatus according to any of the preceding claims, wherein the processing module (45) is configured to operate as a signature server for signing data objects or as a decryption server for decrypting data objects or to use the cryptographic key in the access-controlled storage element (47) for any other purpose.

9. Cryptographic apparatus according to any of the preceding claims, wherein the processing module (45) is configured to operate as a certificate authority for issuing digital certificates.

10. Cryptographic apparatus according to claim 9, wherein a registration authority (21) is connected via the service interface (43) to provide additional information depending on a requested certificate.

11. Cryptographic apparatus according to any of the preceding claims, wherein the processing module (45) comprises a database (48) for storing information about the data objects processed by the processing module (45).

12. Cryptographic apparatus according to any of the preceding claims, comprising a monitoring interface (50) configured to transfer monitoring data and/or backup data to a server (51).

13. Cryptographic apparatus according to any of the preceding claims, wherein the cryptographic apparatus (41) performs a restart in predefined time intervals.

14. Cryptographic apparatus according to any of the preceding claims, wherein at least parts of the cryptographic apparatus (41) is sealed by a resin or similar material filled into its housing (42).

15. Computer-implemented method for providing digitally resulting data objects by a cryptographic apparatus (41) operated remotely from a high-security trust center (30) according to any of claims 1-14.
